# EUROPÄISCHE PATENTANMELDUNG

(11) **EP 0 789 377 A1**
(43) Veröffentlichungstag der Anmeldung: **13.08.1997**
(21) Anmeldenummer: 96117997.5
(22) Anmeldetag: 09.11.1996
(51) Int. Cl.: H01H 39/00, H01H 79/00, B60L 3/04

(54) **Schutzvorrichtung gegen das Anlegen einer unrichtigen Spannung an die Ausrüstungen eines Transportsystems**

(30) Priorität: 09.02.1996 IT MI960253
(71) Anmelder: ABB Tecnomasio S.p.A., 20090 Segrate (IT)
(72) Erfinder: Vittadini, Giuseppe, 20133 Milano (IT)
(74) Vertreter: Mayer, Hans Benno, Dipl.-Ing.

(57) **Zusammenfassung**

Schutzvorrichtung gegen das Anlegen einer unrichtigen Versorgungsspannung an die Ausrüstungen eines schienengebundenenen Transportsystems, wobei die Vorrichtung eine, ein dielektrisches Medium, wie etwa Trockenluft oder SF6 enthaltende, abgedichtete Kammer (1) aufweist und in der Kammer ein Zylinder (3) vorgesehen ist, der mit einem Schliesskontakt zusammenwirkt. Im Inneren des Zylinders (3) ist eine Sprengladung (6) angeordnet, deren Zündung ein rasches Schliessen des Kontaktes (4) bewirkt und dabei einen Kurzschluss auslöst, der das Öffnen der Schalter einer Umspanngungsstation bewirkt. Die Zündung der Sprengladung (6) erfolgt über eine Zündkapsel (7) und einen mit einer Überwachungseinheit verbundenen elektrischen Glühdraht.

## Beschreibung

Die Erfindung betrifft eine Schutzvorrichtung für die Ausrüstungen eines Fahrzeuges in einem schienengebundenen Transportsystem, für den Fall, dass das Fahrzeug mit einer Versorgungsleitung in Verbindung tritt, die sowohl hinsichtlich des Spannungswertes als auch hinsichtlich der Spannungsart (Gleichstrom oder Wechselstrom) unzulässig ist.

Über die elektrischen Versorgungssysteme für schienengebundenene Verkehrsmittel werden unterschiedliche Spannungswerte eingespeist. In Europa kommen rund vier unterschiedliche Hauptversorgungssysteme zur Anwendung, und zwar zwei Systeme mit Gleichstrom- und zwei Systeme mit Wechselstrom-Übertragung. Ausserdem gibt es noch eine gewisse Anzahl anderer, weniger verbreiteter Systeme. Die beiden Hauptsysteme mit Wechselstrom-Übertragung liefern 25 kV bei einer Frequenz von 50 Hz bzw. 15 kV bei einer Frequenz von 16 2/3 Hz. Die beiden Hauptsysteme mit Gleichstrom-Übertragung liefern jeweils Spannungen von 3 kV und 1,5 kV. Wegen des dichten grenzüberschreitenden Verkehrs geschieht es immer häufiger, dass sich ein Antriebsfahrzeug plötzlich unter einem elektrischen Versorgungssystem befindet, das nicht passend für die Maschine ist. Bleibt der Stromabnehmer in einem solchen Fall mit der Oberleitung verbunden, so kann das Antriebssystem erhebliche Schäden erleiden.

Diese Gefahr besteht auch für Antriebsfahrzeuge, die so ausgebildet sind, dass sie unter mehreren elektrischen Systemen betrieben werden können, falls der Netzanschluss ohne entsprechende Auslegung der elektrischen Geräte erfolgt. Mit 3 kV Gleichstrom angetriebene Fahrzeuge haben bei Anschluss an ein Netz mit 15 kV Wechselstrom bereits sehr schwere Schäden erlitten.

Die Prüfspannung für Fahrzeuge mit 4 kV beträgt nämlich für die Dauer einer Minute 12 kV_{eff} bei 50 Hz für alle vor dem Hochgeschwindigkeitsschalter angeordneten elektrischen Einrichtungen und 9 kV für die nach diesem Schalter angeordneten Schaltkreise.

Das Anlegen einer Spannung von 15 kV_{eff} führt daher zu einem Durchschlag nach Masse oder zu einem Überschlag zwischen den Enden des Hochgeschwindigkeitsschalters.

Moderne Fahrzeuge sind durch einen, Metalloxyde enthaltenden Ableiter geschützt, der auch bei einem Strom in der Grössenordnung eines Kurzschlussstromes das Überschreiten einer Scheitelspannung von 11 kV verhindert.

Die Energie, die durch den Ableiter aufgenommen werden kann, ist jedoch gegenüber der vom Netz her lieferbaren Energie äusserst begrenzt, so dass der Ableiter nach wenigen 1/1000 Sekunden einem Kurzschluss erfährt und einen äusseren Lichtbogen erzeugt.

Ein Fahrzeug, das mit Wechselstrom-Antrieb ausgerüstet ist oder für Wechselstrom ausgelegt ist, würde jedoch bei einem Anschluss an einem Versorgungsnetz mit niedrigerer Spannung und mit Gleichstrom-Übertragung ebenfalls schwere Schäden erleiden. Der im Antriebssystem vorgesehene Wechselstrom-Schalter wäre nämlich wegen des Fehlens der für seine Funktion unbedingt notwendigen Nullstrompunkte (Nullstromaugenblicke) nicht in der Lage, den Transport-Systemkreis zu öffnen.

Wenn z.B. ein für 15 kV Wechselstrom ausgelegtes Fahrzeug an einem Gleichstromnetz mit 3 kV Spannung angeschlossen wird, steigt der Strom im Haupttransformator aufgrund einer bekannten Exponentialgleichung an, und zwar sehr schnell, sobald der Kern gesättigt ist. Wenn der Schalter zum Öffnen angesteuert wird, gelingt es ihm nicht, den Lichtbogen zu löschen, weil der Strom nicht durch den Nullpunkt fliesst, was dazu führt, dass der Schalter in kurzer Zeit explodiert. Der Strom steigt daher weiter im Transformator an, bis das Öffnen durch die Unterstation erfolgt, aber inzwischen sind höchstwahrscheinlich wegen der dynamischen Auswirkungen des Kurzschlusstromes bereits beträchtliche und bleibende Schäden entstanden.

Andere Nachteile ergeben sich, wenn der Übergang von einer Versorgungsart zur anderen automatisch zu erfolgen hat, da der Ausfall einer beliebigen Ausrüstung oder das Nichteinhalten der vorgesehenen Betriebsgrenzen die richtige Funktion des automatischen Überwachungssystems verhindern kann.

Der Erfindung liegt die Aufgabe zugrunde, die Grenzen und die Nachteile der bisherigen Technik insbesondere dadurch zu überwinden, dass eine Schutzvorrichtung vorgeschlagen wird, die in der Lage ist, die Auswirkungen einer ungeeigneten Spannungsversorgung auf eine vorübergehende Dienstunterbrechung zu beschränken, und zwar ohne bleibende Beschädigung der Ausrüstungen.

Diese Aufgaben werden durch die Erfindung gelöst, die eine Schutzvorrichtung zum Schutz der Ausrüstungen eines Fahrzeuges in einem schienengebundenenen Transportsystem vorschlägt, die dadurch gekennzeichnet ist, dass die Vorrichtung aus einer, ein dielektrisches Medium enthaltenden, abgedichteten Kammer und einem einen Kontakt tragenden Zylinder besteht und dass im Inneren des Zylinders eine Sprengladung und eine Zündkapsel angeordnet sind, die mit einem elektrischen und mit einer Überwachungseinheit verbundenen Glühdraht versehen ist, und die Überwachungseinheit in der Lage ist, das Vorhandensein einer unrichtigen Versorgungsspannung an der Ausrüstung zu ermitteln.

Die erfindungsgemässe Schutzvorrichtung ist im wesentlichen eine Schliessvorrichtung, die in der Lage ist, rasch einen Kurzschluss auszulösen, der seinerseits das Betätigen der Schalter der Umspannstation bewirkt und dadurch eine Beschädigung der Fahrzeug-Ausrüstungen verhindert.

Weitere vorteilhafte Merkmale der Erfindung sind Gegenstand der Unteransprüche.

Ohne die Erfindung einzuschränken, ist die erfindungsgemässe Vorrichtung in jenen Fällen besonders vorteilhaft, bei denen ein für 15 kV Wechselstrom vorgesehenes Triebfahrzeug durch ein 3-kV-System mit Gleichstrom-Übertragung versorgt wird und umgekehrt, oder in jenen Fällen, bei denen ein für 25 kV Wechselstrom vorgesehenes Anriebsfahrzeug versehentlich durch ein 3-kV-System mit Gleichstrom-Übertragung versorgt wird und umgekehrt.

Die Erfindung wird nachstehend anhand der beiliegenden Zeichnungen genauer beschrieben, in den Zeichnungen ist eine bevorzugte Ausführungsform der Erfindung dargestellt.

Es zeigen:
Figur 1 die erfindungsgemässe Schutzvorrichtung in einem schematisch dargestellten Schaltkreis; und
Figur 2 eine schematische Darstellung der Anwendung der Schutzvorrichtung bei einem mit einem Stromableiter versehenen Fahrzeug.

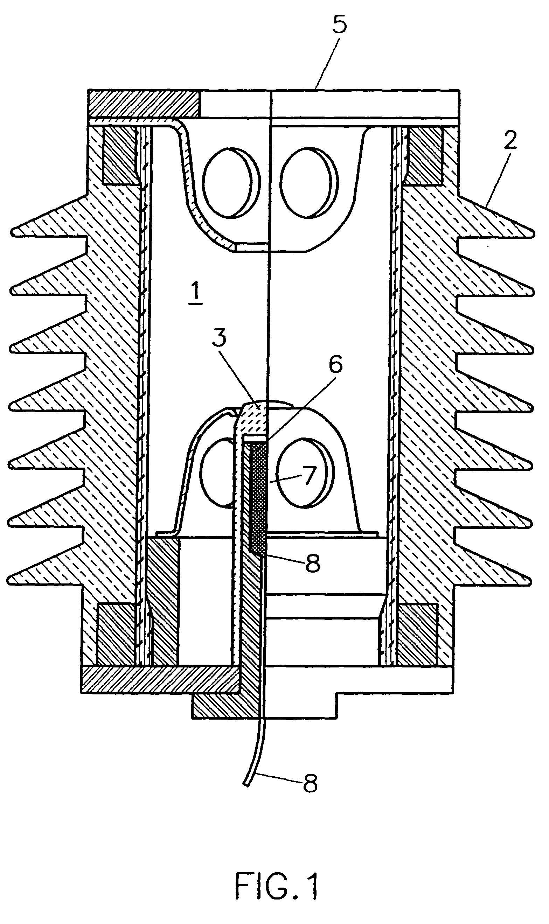

Figur 1 zeigt die erfindungsgemässe Schutzvorrichtung, die aus einer abgedichteten Kammer 1 besteht, die im Inneren eines Isolators 2, bestehend aus Silikonharz, angeordnet ist und ein Medium mit kontrollierten, dielektrischen Eigenschaften enthält, z.B. trockene Luft, die auch bei der niedrigsten Betriebstemperatur nicht kondensiert.

Oben ist die Kammer 1 durch einen am Isolatorkörper angeklebten Deckel 5 geschlossen. Im Inneren nimmt die Kammer einen Zylinder 3 auf, der mit einem Schliesser 4 versehen ist. Im Inneren des Zylinders 3 ist eine nicht brisante Sprengladung 6, mit einer durch einen elektrischen Glühdraht 8 zündbare Zündkapsel 7, angeordnet. Die Klebeverbindung des isolierten Deckels 5 ist so ausgelegt, dass nach der Explosion der Sprengladung 6 eine Ableitung der Druckes erfolgen kann.

Der Glühdraht 8 wird über eine (nicht dargestellte) elektronische Schutzeinheit oder Baugruppe selektiv gespeist, und es erfolgt eine Zündung sobald vorgegebene, im Anschluss noch beschriebene Schutzkriterien vorliegen.

Die Zündung der Sprengladung 6 löst eine schnelle Bewegung des Kontaktes 4 aus, der sofort geschlossen wird und einen Kurzschluss auslöst, bei dem der Fehlerstrom abgelenkt wird und das Öffnen der (nicht dargestellten) Unterstationsschalter auslöst und dadurch eine Beschädigung der Fahrzeug-Ausrüstungen verhindert.

Das Fahrzeug kann anschliessend einfach durch Absenken des Stromabnehmers und Nachladen (oder Austausch) der Schutzvorrichtung in der Werkstatt wieder betriebsfähig gemacht werden.

Da bei den gegenwärtig verwendeten Schaltungen die Stromabnehmer für die verschiedenen Versorgungssysteme parallelgeschaltet sind, genügt die Anwendung einer einzigen Schutzvorrichtung für jede Elektrolok oder jedes Triebfahrzeug.

Die erfindungsgemässe Schutzvorrichtung lässt sich durch einen auf dem Dach des Fahrzeuges anzuordnenden hohlen Stützisolators günstig herstellen. Der den Zylinder 3 und die Sprengladung 6 enthaltende Flansch wird geerdet und am Dach befestigt. Die Elektroden sind in kleinstmöglichem Abstand voneinander angeordnet und abgerundet, um die vorgeschriebene impulsartige Prüfspannung auszuhalten.

Das dielektrische Medium im Inneren der Kammer ist normalerweise Luft, die durch Einsatz eines hygroskopischen Materials, wie etwa eines Kieselgel oder eines Kaliproduktes, das z.B. in einem Beutels enthalten ist, trocken gehalten wird. Soll der Weg zwischen den Kontakten auf ein Mindestmass herabgesetzt werden, so kann die Kammer mit Druckluft oder einem Isoliergas wie SF₆ gefüllt werden.

Der Einschaltverzug nach Erhalt des Befehls ist äusserst gering und beträgt jedenfalls nicht mehr als 4-5 1/1000 Sekunden, während die Zündung der Sprengladung vorzugsweise infolge einer kapazitiven Entladung erfolgt.

Im Anschluss wird die Arbeitsweise der Schutzvorrichtung anhand von zwei besonderen Ausführungsarten näher beschrieben.

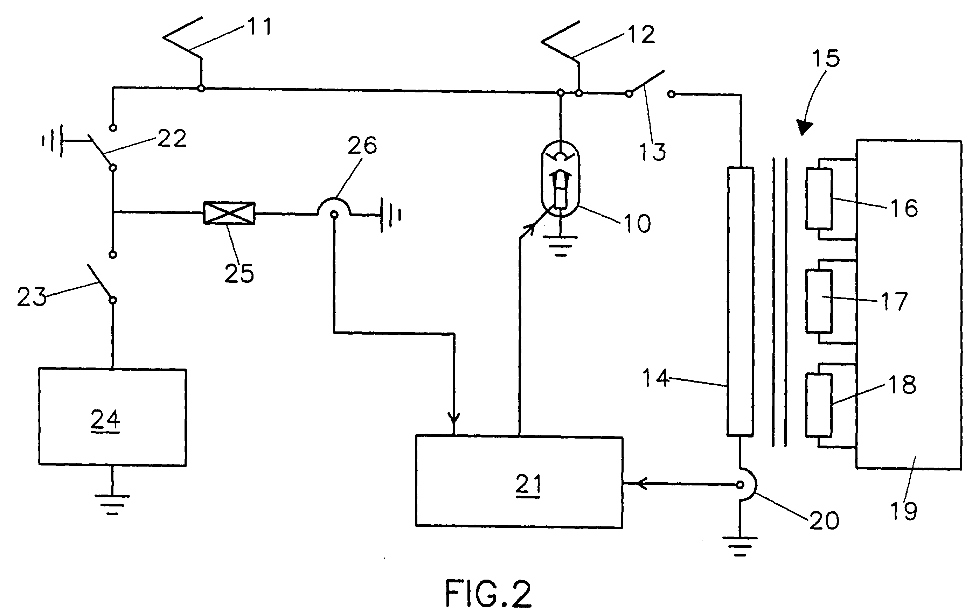

Figur 2 zeigt einen typischen Einschaltplan für die erfindungsgemässe Vorrichtung für die Ausrüstung eines schienengebundenenen Transportsystems, bei dem sowohl Gleichstrom- als auch Wechselstrom-Leitungen zur Anwendung kommen können.

Die Schutzvorrichtung 10 ist zwischen den beiden Stromabnehmern 11 und 12 (die jeweils für Gleichstrom- und für Wechselstrom-Übertragung ausgelegt sind) und der Masse vorgesehen. An der Seite des Stromabnehmers 12 für Wechselstrom ist das eine Endstück eines Schalters 13 angeschlossen, der bei Gleichstrom-Zufuhr geöffnet wird.

Das andere Endstück des Schalters 13 ist mit der Primärwicklung 14 des Haupttransformators 15 verbunden, dessen Sekundärwicklungen 16, 17 und 18 in bekannter Art und Weise mit einem Wechselstrom-Wandler 19 verbunden sind.

Ein Stromsensor 20 ist zwischen dem anderen Ende der Primärwicklung 14 und der Masse angeschlossen und stellt den einen Eingang der Zündvorrichtung 21 dar, die die Zündung der Sprengladung 6 ansteuert.

An der Gleichstrom-Seite ist das eine Ende eines Systemtrennschalters 22 am Stromabnehmer 11 angeschlossen. Der Gleichstrom-Wandler des Antriebs ist zwischen der Masse und dem Trennschalter 22 über einen Gleichstrom-Hauptschalter 23 angeschlossen. Mit dem Systemtrennschalter 22 ist des weiteren ein Gleichstrom-Ableiter 25 angeschlossen, dessen anderes Ende über einen Sensor 26 an Masse angelegt ist, der den zweiten Eingang der Zündvorrichtung 21 darstellt.

Im Fall eines für 3 kV ausgelegten und mit einem Ableiter versehenen Fahrzeuges, verhindert der Ableiter jedenfalls ein Überschreiten der 11 kV Spitze der Eingangsspannung, so dass die Ausrüstungen nicht beschädigt werden. Um jedoch die oben geschilderte Zerstörung des Ableiters zu vermeiden, ist erfindungsgemäss ein Sensor vorgesehen, der in Form einer Rogowski-Spule mit dem Erdanschluss verbunden ist. Die Spule liefert ein Signal mit hoher Impedanz, das im wesentlichen dem Strom proportional ist, der von dem durch die Spule fliessenden Strom abgeleitet wird. Das durch den Rogowski-Sensor erzeugte Signal wird zweimal integriert und mit einem vorgegebenen Wert verglichen. Da während der Zuführung die Spannung am Ableiter dazu neigt, im wesentlichen konstant zu bleibend, stellt das zweckmässig abgestufte Stromintegral die Energieaufnahme dar. Bei Überschreiten des vorgegebenen Wertes wird die erfindungsgemässe kurzschliessende Vorrichtung betätigt.

Bei dieser Anordnung kann die vom Ableiter aufgenommene Energie in beträchtlichem Mass höher als seine Nennenergie sein, da nach dem Einschwingvorgang der Ableiter Zeit genug hat, um vor dem nächsten Anlegen der Spannung gekühlt zu werden.

Wenn ein auf 15 kV mit Wechselstromübertragung ausgelegtes Fahrzeug an einer Oberleitung für Gleichstrom angeschlossen wird, würde es theoretisch ausreichen, sich zu vergewissern, dass der Strom im Transformator innerhalb einer Periode oder eines Zyklus der Versorgungsspannung, d.h. innerhalb 60 Millisekunden, über den Nullpunkt fliesst. Es ist jedoch schwierig, den Stromnullpunkt beim Einschalten zu ermitteln, wenn der magnetisierende Strom eine vorwiegend gleichbleibende Richtung mit Spitzen von 1500 A in der einen Richtung und wenig Ampere in der entgegengesetzen Richtung einschlägt. Erfindungsgemäss wird der abgeleitete Strom verwendet, der bei der Wechselstrom-Übertragung jedenfalls auch beim Einschalten in der Zeit einer Periode seinen Wert beträchtlich ändert, der dagegen bei dem, dem Einschalten in ein Gleichstrom-Netz folgenden Einschwingvorgang, unverändert bleiben würde. Das Entscheidungskriterium lässt sich durch einfache elektronische Analog- oder Digitalverfahren mittels der Stromsensoren wählen, die normalerweise bereits dem Primärkreis zugordnet sind, mit dem die Schienenfahrzeuge üblicherweise ausgerüstet sind.

## Patentansprüche

1. Schutzvorrichtung gegen das Anlegen einer unrichtigen Spannung an die Ausrüstungen eines Transportsystems, **dadurch gekennzeichnet**, dass die Vorrichtung aus einer, ein dielektrisches Medium enthaltenden, abgedichteten Kammer (1) und einem einen Kontakt (4) tragenden Zylinder (3) besteht, wobei im Inneren des Zylinders (3) eine Sprengladung (6) und eine Zündkapsel (7) angeordnet sind, die mit einem elektrischen, mit einer Überwachungseinheit (9) verbundenen Glühdraht (8) verbunden ist, und die Überwachungseinheit in der Lage ist, das Anliegen einer unrichtigen Versorgungsspannung an der Ausrüstung zu ermitteln.

2. Schutzvorrichtung, nach Anspruch 1, **dadurch gekennzeichnet**, dass die Vorrichtung in Form eines hohlen Stützisolators (2) aus Harz besteht, der auf dem Dach des Fahrzeuges angeordnet ist und mit einem, den Zylinder (3) und die Sprengladung (6) enthaltenden Flansch versehen ist, der am Dach des Fahrzeuges befestigt und geerdet ist.

3. Schutzvorrichtung, nach Anspruch 1 oder 2, **dadurch gekennzeichnet**, dass das dielektrische Medium aus Trockenluft besteht, die einen relativen Feuchtigkeitsgehalt aufweist, der auch bei niedrigster Betriebstemperatur eine Kondensation vermeidet.

4. Schutzvorrichtung, nach Anspruch 2 oder 3, **dadurch gekennzeichnet**, dass das dielektrische Medium von Druckluft gebildet ist.

5. Schutzvorrichtung, nach Anspruch 3 oder 4, **dadurch gekennzeichnet**, dass die Kammer ein hygroskopisches Material, wie Kieselgel oder ein Kaliprodukt, enthält.

6. Schutzvorrichtung, nach Anspruch 1 oder 2, **dadurch gekennzeichnet**, dass das dielektrische Medium aus SF₆-Gas besteht.

7. Schutzvorrichtung, nach den Ansprüchen 1 bis 6, **dadurch gekennzeichnet**, dass die Elektroden abgerundete Form aufweisen.

8. Schutzvorrichtung, nach Anspruch 1, **dadurch gekennzeichnet**, dass dem Glühdraht eine kapazitive Entladung zugeführt wird.
